# EUROPÄISCHE PATENTSCHRIFT

(11) **EP 0 280 035 B1**
(45) Veröffentlichungstag und Bekanntmachung des Hinweises auf die Patenterteilung: **23.03.1994**
(21) Anmeldenummer: 88100810.6
(22) Anmeldetag: 20.01.1988
(51) Int. Cl.: G06F 12/14, G06F 11/08

(54) **Verfahren zum Sichern von Programmen und zur Integritätskontrolle gesicherter Programme**
Method for the programme securing and for integrity checking of a secured programme
Procédé de protection de programmes et de contrôle d'intégrité de programme protégé

(30) Priorität: 23.02.1987 DE 3705736
(43) Veröffentlichungstag der Anmeldung: 31.08.1988
(73) Patentinhaber: Siemens Nixdorf Informationssysteme Aktiengesellschaft, 33102 Paderborn (DE)
(72) Erfinder: Paulini, Werner, D-4796 Salzkotten (DE); Wessel, Dietmar, D-4795 Delbrück (DE)
(74) Vertreter: Fuchs, Franz-Josef, Dr.-Ing.

(56) Entgegenhaltungen:
- EP-A- 0 135 888
- DE-A- 2 650 795
- US-A- 4 593 353
- ELECTRONICS, Band 52, Nr. 13, Juni 1979, Seiten 107-120; H.J. HINDIN: "LSI-based data encryption discourages the data thief"

## Beschreibung

Die Erfindung betrifft ein Verfahren zum Sichern der in dem Systemspeicher einer Datenverarbeitungsanlage enthaltenen Programme gegen Änderung und zur Integritätskontrolle gesicherter Programme.

In Datenverarbeitungsanlagen und mit ihnen aufgebauten Rechnersystemen sind die zur Steuerung und zur Anwendung dienenden Programme, also das aus Betriebssystem und Anwendungssystem bestehende Programmsystem, in einem Systemspeicher gespeichert, der beispielsweise eine Magnetplatte sein kann. Beim Betrieb einer Datenverarbeitungsanlage werden die Programme in einen Arbeitsspeicher geladen und abgearbeitet, um im Rahmen des Betriebssystems die Arbeitsabläufe der Datenverarbeitungsanlage zu steuern und im Rahmen des Anwendungssystems durch den Anwender vorgegebene Aufgaben der Datenverarbeitung zu lösen.

Mit Datenverarbeitungsanlagen wurden Rechnernetze entwickelt, in denen einzelne Rechner miteinander kommunizieren. Der dabei weitgehend automatisch ablaufende Informationsaustausch muß insbesondere in Anwendungsbereichen wie Bankwesen, Versicherungswesen, Handel oder Verwaltung gegen betrügerische Manipulation gesichert werden. Derartige Manipulationen können auch auf Programmebene erfolgen und möglicherweise dazu führen, daß ein Rechner unerwünschte zusätzliche, zu wenige oder veränderte Befehle ausführt, was die Folge haben kann, daß personenbezogene Daten mißbräuchlich ausgewertet, verarbeitet und weitergegeben werden, Rechnerausgaben zum Vorteil eines Unberechtigten erfolgen oder anderweitiger Schaden dem Anwender des Rechnernetzes oder Dritten zugefügt wird.

Aus der US-Patentschrift 4 593 353 ist ein Verfahren und eine Vorrichtung zum Schutz von Software gegen Piraterie bekannt, bei dem ein als Eigentum erworbenes Programm zusammen mit einem ersten und zweiten Autorisierungscode auf einer Magnetplatte gespeichert wird. Der erste und zweite Autorisierungscode werden von der Platte gelesen (Schritte 1 und 2). Ein einen für das autorisierte System einmaligen Pseudozufallszahlengenerator (PRN) enthaltendes Hardwaremodul erhält den ersten Autorisierungscode als Schlüssel (Schritt 3). Die vom PRN-Generator ermittelte Zahl (Schritt 4), welche eine Funktion des Schlüssels und des speziellen PRN-Algorithmus ist, wird mit dem zweiten, in direkter oder verschlüsselter Form vorliegenden Autorisierungscode verglichen (Schritt 5). Ein Signal zur Ausführung des gespeicherten Programms wird bei positivem Vergleichsergebnis abgegeben. (Schritt 6).

Da es für den Anwender eines Rechnernetzes sehr schwierig ist, manipulierte Programme zu erkennen und dann durch entsprechende Korrekturmaßnahmen Integrität zu gewährleisten, sollte es möglich sein, die Manipulation von Programmen automatisch zu erkennen und gleichfalls automatisch das Ausführen manipulierter Programme zu verhindern. Zur Sicherung von Programmen sind allerdings bisher nur Verfahren bekannt, die das nicht autorisierte Kopieren verhindern und hierzu Verschlüsselungen anwenden, die zum Ausführen solcher Programme spezielle Prozessoren erfordern. Solche Sicherungsmaßnahmen sollen die unberechtigte wirtschaftliche Auswertung und Weitergabe von Programmen verhindern, können aber nicht Manipulationen an Programmen in Rechnernetzen erkennen und Falschausführung von Programmen verhindern. Es ist auch möglich, eine Betriebsmittel- und Zugriffskontrolle durch Verwendung von Paßworten oder Benutzerkatalogen, eine Geheimhaltung von Daten oder physikalische Maßnahmen wie Autorisierung über spezielle Schalter oder Schlüssel vorzusehen, um einen gewissen Schutz gegen unberechtigte Manipulationen zu erreichen. Diese Möglichkeiten sind aber vergleichsweise wertlos, wenn ein Programmierer oder vergleichbar qualifiziertes Personal Zugriff zum Rechnernetz hat. Dann ist es aufgrund der besonderen Fachkenntnisse möglich, Programme trotz Schutzmaßnahmen vorstehend genannter Art zu manipulieren.

Der Erfindung liegt deshalb die Aufgabe zugrunde, ein Verfahren anzugeben, durch das es möglich ist, in einer Datenverarbeitungsanlage ohne wesentliche Beeinträchtigung der Systemleistung Manipulationen an Programmen automatisch zu erkennen und automatisch das Wirksamwerden manipulierter Programme zu verhindern.

Diese Aufgabe löst die Erfindung für ein Verfahren eingangs genannter Art dadurch, daß mindestens die den Systemanlauf bewirkenden Programme jeweils nach einem symmetrischen kryptographischen Algorithmus unter Verwendung eines lesegeschützt gespeicherten geheimen Schlüssels zur Bildung einer Prüfziffer verschlüsselt werden, die in dem Systemspeicher gespeichert wird, und daß zur Integritätskontrolle mit dem Systemanlauf der Datenverarbeitungsanlage ein sukzessives nochmaliges derartiges Verschlüsseln der Programme und jeweils ein Vergleich der so erhaltenen Prüfziffer mit der zugehörigen gespeicherten Prüfziffer veranlaßt wird, so daß bei negativem Vergleichsergebnis das Aktivieren jeweils nachfolgender Systemanlaufschritte bzw. Programme sperrbar ist.

Durch die Erfindung wird erreicht, daß Manipulationen im gesamten Programmsystem einer Datenverarbeitungsanlage, also im Betriebssystem und im Anwendungssystem, automatisch erkannt werden und bereits im Systemanlauf bei Erkennen einer Manipulation sofort der Betrieb unterbrochen werden kann. Man erhält dadurch den Effekt einer "Versiegelung" der Programme bzw. einen versiegelten Systemspeicher oder Systemträger, was sich schon bei dem Systemstart der Datenverarbeitungsanlage auswirkt, da dann bereits die Integritätskontrolle erfolgen kann. Zur Sicherung der Programme wird der Systemspeicher mit zusätzlichen Informationen in Form von Prüfziffern versehen, die das Ergebnis von Verschlüsselungsschritten sind, welche unter Zugrundelegung eines geheimen Schlüssels durchgeführt werden. In einem Rechnernetz mit Verwaltungsrechner und mehreren Zielrechnern kann der Systemträger für den jeweiligen Zielrechner im Verwaltungsrechner in dieser Weise versiegelt werden, wobei die Prüfziffern als logisches Siegel für alle auf dem Systemträger gespeicherten Programme dienen können, die ladefähig und zum Ablauf des Anwendungssystems notwendig sind. Es sind dies die Programme für das während des Rechnerbetriebs speicherresidente Betriebssystem sowie alle Programme, die in Ladebibliotheken in ablauffähiger Form gespeichert sind. Da zu dieser Versiegelung ein geheimer Schlüssel verwendet wird, der lesegeschützt gespeichert ist, muß jede unberechtigte Manipulation an den Programmen bei der Integritätskontrolle im Zielrechner, bei der unter Verwendung desselben geheimen Schlüssels ein nochmaliges Verschlüsseln eines jeden Programms unter Bildung der Prüfziffer durchgeführt wird, bei dem gemäß der Erfindung durchzuführenden Vergleichsschritt zu einem Fehlersignal führen, denn die für das manipulierte Programm durchgeführte Verschlüsselung führt zu einer anderen Prüfziffer als sie für das nicht manipulierte Programm im Verwaltungsrechner erzeugt wurde. Das Fehlersignal kann dann zum automatischen Sperren der Aktivierung nachfolgender Programme benutzt werden.

Das Verschlüsseln wird unter Verwendung eines symmetrischen kryptographischen Algorithmus durchgeführt, wobei die Schlüssel zum Chiffrieren und Dechiffrieren identisch sind oder in einem einfachen Zusammenhang stehen. Dieses Verschlüsselungsprinzip bietet bekanntermaßen einen sehr hohen Sicherheitsgrad gegen Entschlüsselung. Die bekannteste Ausführungsform ist der DES-Algorithmus (DES = DATA Encryption Standard). Die Entschlüsselung eines verschlüsselten Textes läuft in genau umgekehrter Reihenfolge ab wie die Verschlüsselung des Klartextes durchgeführt wurde. Deshalb handelt es sich um ein symmetrisches Verfahren. Die hohe Sicherheit dieses Algorithmus beruht auf seinen mathematischen Eigenschaften, die dazu führen, daß die Kenntnis des Klartextes und auch des zugehörigen Schlüsseltextes nicht ausreicht, um mit vertretbarem Aufwand den geheimen Schlüssel zu ermitteln. Im Rahmen der Erfindung wird der DES-Algorithmus aber nicht zum Verschlüsseln von Daten, sondern zur Ableitung einer Prüfsumme bei der Verschlüsselung von Programmen eingesetzt.

Das lesegeschützte Speichern des für die Verschlüsselung verwendeten Schlüssels ist an sich bekannt, und hierzu kann ein besonderer Sicherheitsbaustein vorgesehen sein, mit dem jeder Rechner des Rechnernetzes ausgerüstet ist. Dieser Sicherheitsbaustein kann einen Speicher enthalten, in den der verwendete Schlüssel in physikalisch unzugänglicher Form eingespeichert ist. Wie noch gezeigt wird, kann der Sicherheitsbaustein auch weitere Hardware-Funktionseinheiten enthalten, die den mit der Erfindung erzielten Sicherheitseffekt weiter erhöhen können.

Da das erfindungsgemäße Verfahren entsprechend dem Ablauf des Programmsystems in einer Kette aufeinander folgender Verschlüsselungsschritte bzw. Kontrollschritte durchgeführt wird, kann die mit ihm erreichte Sicherheit gegen die Auswirkung unberechtigter Programmanipulationen weiter erhöht werden, wenn die Prüfziffer des ersten, den Start des Systemanlaufs bewirkenden Programms, des sogenannten Urladerprogramms, lesegeschützt gespeichert wird. Diese zusätzliche Maßnahme verhindert die Kenntnis der ersten in der Kontrollsequenz auftretenden Prüfziffer und macht somit den Versuch unmöglich, unter Verwendung dieser Prüfziffer möglicherweise den geheimen Schlüssel zu ermitteln, mit dem auch die Verschlüsselung des Urladerprogramms durchgeführt wurde. Damit ist der erste im Rahmen der Integritätskontrolle ablaufende Prüfvorgang absolut sicher gegen unberechtigten Zugriff und Veränderung.

Die Erfindung wird im folgenden an Hand der Figuren weiter erläutert. Es zeigen:
- Fig. 1: die gegenseitige Zuordnung und Wechselwirkung von Komponenten eines Verwaltungsrechners bei der Durchführung des Verfahrens,
- Fig. 2: die gegenseitige Zuordnung und Wechselwirkung der Komponenten eines Zielrechners bei der Durchführung des Verfahrens,
- Fig. 3: die Darstellung des Ablaufs sukzessiver Prüfschritte in einem Zielrechner,
- Fig. 4: den prinzipiellen Ablauf einer Verschlüsselung mit Prüfziffernbildung in einem Verschlüsselungsbaustein eines Verwaltungsrechners,
- Fig. 5: den prinzipiellen Ablauf einer Verschlüsselung und eines Prüfziffernvergleichs in einem Sicherheitsbaustein eines Zielrechners und
- Fig. 6: den grundsätzlichen Aufbau eines Sicherheitsbausteins.

Im folgenden wird erläutert, wie das erfindungsgemäße Verfahren zum Sichern der Programme im praktischen Einsatz mit einem Verwaltungsrechner und einem Zielrechner durchgeführt wird. Allgemein gilt dabei, daß in dem Verwaltungsrechner ein für die Inbetriebnahme eines Zielrechners lauffähiger Systemträger mit zusätzlichen Informationen in Form der Prüfziffern versehen wird. Diese Prüfziffern ergeben sich aus mehreren Verschlüsselungsschritten, die unter Anwendung eines in einem Sicherheitsbaustein gespeicherten geheimen Schlüssels durchgeführt werden und denen die auf dem Systemträger gespeicherten Programme nacheinander unterzogen werden. Die Prüfziffern sind logisches Siegel für alle auf dem Systemträger des Zielrechners gespeicherten Programme, die ladefähig und zum Ablauf des Anwendungssystems notwendig sind. Zusätzlich wird dabei eine Prüfziffer für die Startprozedur erzeugt, die in dem Sicherheitsbaustein nicht lesbar gespeichert wird. Alle anderen Prüfziffern können frei zugänglich und lesbar auf dem Systemträger gespeichert werden, da der geheime Schlüssel für die Verschlüsselungsschritte nicht zugänglich ist. Der Sicherheitsbaustein des Zielrechners arbeitet derart, daß der in ihm gespeicherte Schlüssel nur zur Berechnung einer Prüfziffer bei gleichzeitigem Vergleich dieser Prüfziffer mit einer dem Sicherheitsbaustein zugeführten Referenz-Prüfziffer verwendet wird, so daß der Sicherheitsbaustein als Ergebnis keine Prüfziffer ausgeben kann, sondern lediglich eine Ja-Nein-Aussage darüber ausgibt, ob die berechnete Prüfziffer mit der Referenz-Prüfziffer übereinstimmt oder nicht, d.h. im Zielrechnersystem ist ohne Kenntnis des geheimen Schlüssels keine unberechtigte PZ-Prüfziffernberechnung möglich.

Nachdem im Verwaltungsrechner in beschriebener Weise ein Systemträger mit den zusätzlichen Informationen versehen wurde, kann dieser Systemträger im Zielrechner eingesetzt werden. Bei Inbetriebnahme des Zielrechnersystems wird die Integritätskontrolle automatisch innerhalb der zeitlich vor dem Anwendungsbetrieb laufenden Systemanlaufprozedur veranlaßt. Dabei ergeben sich mehrere Prüfschritte, wobei ein jeweiliger Prüfschritt nur dann veranlaßt wird, wenn sein Ausführungscode durch den vorhergehenden Prüfschritt als unverändert nachgewiesen wurde.

Der erste Prüfschritt wird von dem Urladerprogramm veranlaßt und in dem Sicherheitsbaustein durchgeführt. Somit ist diese Logik physikalisch nicht frei zugänglich. Wird das Urladerprogramm logisch beeinflußt bzw. verändert, so wird bereits bei dem ersten Prüfschritt innerhalb des Sicherheitsbausteins eine solche Veränderung festgestellt und der Sicherheitsbaustein deaktiviert, so daß er für die nachfolgenden Prüfschritte nicht mehr benutzt werden kann und diese somit nicht mehr durchführbar sind.

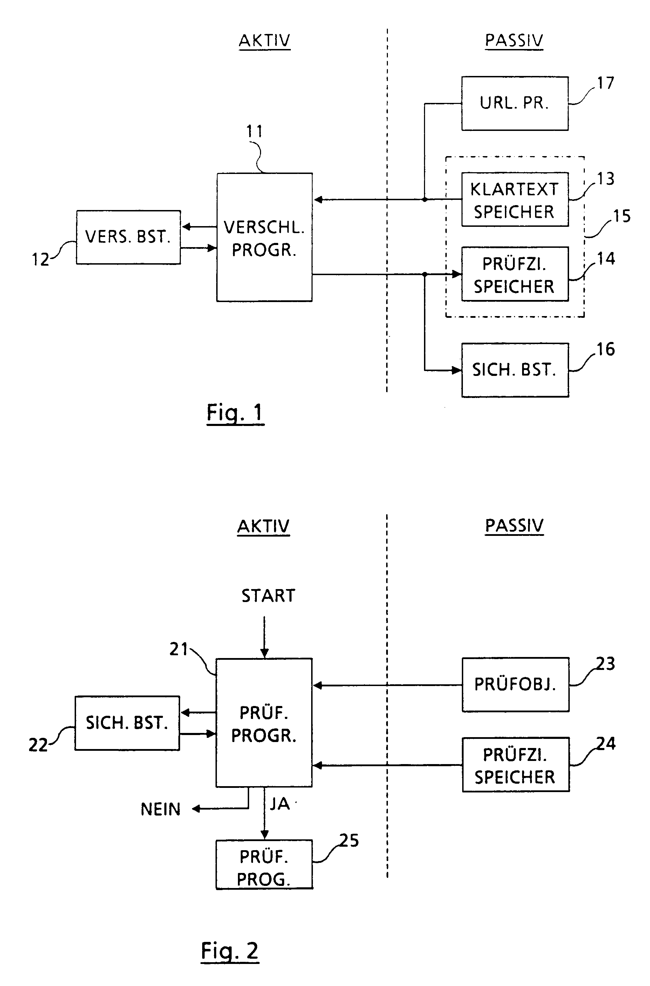

In Fig. 1 ist dargestellt, wie in dem Verwaltungsrechner der Systemträger und der Sicherheitsbaustein eines Zielrechners dem erfindungsgemäßen Verfahren unterzogen werden. Auf der linken Seite der vertikalen gestrichelten Linie sind schematisch die im Rahmen des Sicherungsverfahrens aktiven Komponenten des Verwaltungsrechners dargestellt, während rechts die passiven Komponenten gezeigt sind, die für den Einsatz im Zielrechner vorbereitet werden müssen. Aktive Komponenten sind ein Verschlüsselungsprogramm 11, mit dem die einzelnen, zur Berechnung von Prüfziffern durchzuführenden Verschlüsselungsschritte gesteuert werden, und ein Verschlüsselungsbaustein 12, dem gesteuert durch das Verschlüsselungsprogramm 11, die einzelnen zu sichernden Programme zugeführt werden, so daß er für jedes Programm eine Prüfziffer abgeben kann. Passive Komponenten sind ein Systemträger 15 mit einem Prüfziffernspeicher 14 und einem Klartextspeicherteil 13 für gesicherte Programme sowie ein Sicherheitsbaustein 16 und ein Klartextspeicher 17 für ein Urladerprogramm.

Bei der Vorbereitung der passiven Komponenten für den Einsatz im Zielrechner wird zunächst das Urladerprogramm aus dem Klartextspeicher 17, gesteuert durch das Verschlüsselungsprogramm 11, ausgegeben und mit dem Verschlüsselungs baustein 12 unter Verwendung des in ihm vorhandenen geheimen Schlüssels die dem Urladerprogramm zuzuordnende Prüfziffer berechnet. Diese wird dann vom Verschlüsselungsbaustein 12 ausgegeben und, unter Steuerung durch das Verschlüsselungs programm 11, dem Sicherheitsbaustein 16 zugeführt; mit diesem Schritt wird dem Sicherheitsbaustein 16 gleichzeitig der geheime Schlüssel zur lesegeschützten Speicherung übergeben. Danach werden die Prüfziffern für die in dem Klartextspeicherteil 13 des Systemträgers 15 enthaltenen Programme berechnet und, gesteuert durch das Verschlüsselungsprogramm 11, in dem Prüfziffernspeicher 14 des Systemträgers 15 gespeichert. Sämtlichen Verschlüsselungsschritten die in dem Verschlüsselungsbaustein 12 des Verwaltungsrechners durchgeführt werden, liegt der geheime Schlüssel zugrunde, der in dem Verschlüsselungsbaustein 12 abgespeichert ist.

Fig. 2 zeigt, in welcher Weise ein wie beschrieben vorbereiteter Systemträger und Sicherheitsbaustein in einem Zielrechner allgemein zur Integritätskontrolle von Programmen eingesetzt werden. Es ist ein Prüfschritt als Teil einer Kette von Prüfschritten dargestellt, die innerhalb der Systemanlaufphase des Zielrechners liegen können. Auf der linken Seite einer vertikalen gestrichelten Linie sind aktive Komponenten, auf der rechten Seite passive Komponenten des Zielrechners dargestellt. Jeder Prüfschritt wird mit einem prüfenden Programm 21 durchgeführt, das als Prüfer bezeichnet ist und die Prüfobjekte, nämlich ein zu prüfendes Programm 23 und eine zugehörige Prüfziffer 24, enem Sicherheitsbaustein 22 zuführt, der in beschriebener Weise unter Verwendung des in ihn eingegebenen geheimen Schlüssels für jedes ihm zugeführte Programm eine Prüfziffer berechnet und diese mit der ihm zugeführten zugehörigen Prüfziffer 24 vergleicht. Das Vergleichsergebnis übergibt der Sicherheitsbaustein 22, gesteuert durch das prüfende Programm 21, in Form einer Ja-Nein-Aussage an die nächste prüfende Instanz, die das soeben geprüfte Programm ist, sofern es sich um eine Ja-Aussage handelt. Handelt es sich um eine Nein-Aussage, so wird ein besonderer Funktionsblock aktiviert, der die Fehlersituation signalisieren kann und beispielsweise den Ablauf des Systems unterbricht, eine Fehlermeldung veranlaßt oder anderweitig einen Korrektureingriff erzwingt.

Der gesamte vorstehend beschriebene Vorgang wird veranlaßt durch ein dem prüfenden Programm 21 zugeführtes Startsignal, das die Ja-Aussage des vorhergehenden Prüfschritts oder aber das anfängliche Startsignal für den Systemstart sein kann.

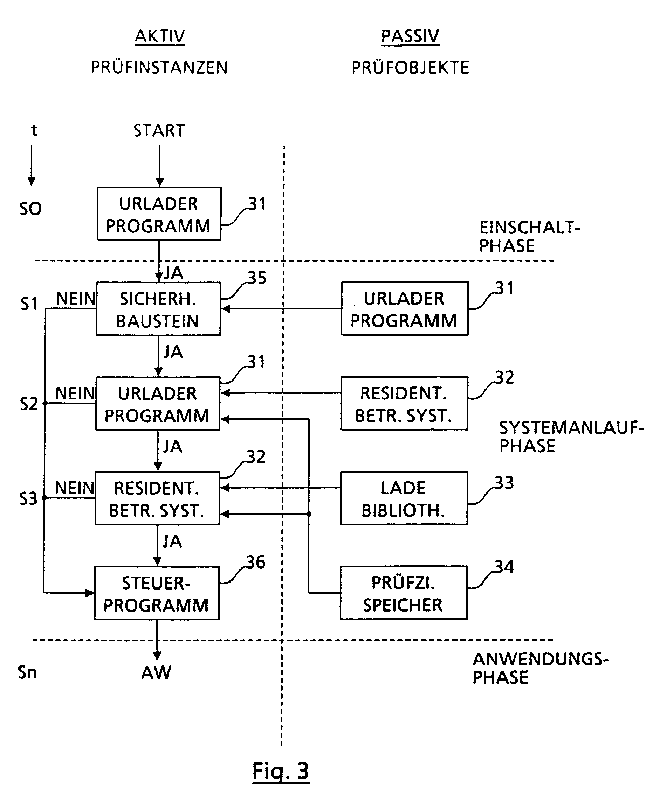

Fig. 3 zeigt, wie eine Folge von Prüfschritten vorstehend erläuterter Art in einem Zielrechner durchgeführt werden kann. Es handelt sich um eine Darstellung des zeitlichen Ablaufs dieser Prüfschritte, die von oben nach unten in drei Phasen unterteilt ist, nämlich eine Einschaltphase, eine Systemanlaufphase und eine Anwendungsphase. Dabei sind wie in den Fig. 1 und 2 die aktiven Komponenten links, die passiven Komponenten rechts von einer vertikalen gestrichelten Linie dargestellt. Die einzelnen Prüfschritte sind fortlaufend mit S0, S1, S2, S3 ... Sn bezeichnet. Bei jedem Prüfschritt S1 bis Sn ist als aktive Komponente ein prüfendes Programm und als passive Komponente ein zu prüfendes Programm dargestellt. Dabei ist der Sicherheitsbaustein für den jeweiligen Prüfschritt nicht gezeigt, da seine Funkton bereits an Hand der Fig. 2 erläutert wurde.

Mit Einschalten des Zielrechners wird im Prüfschritt S0 ein Startsignal ST an das Urladerprogramm 31 gegeben, das dadurch gestartet wird und den Prüfschritt S1 veranlaßt, der damit erster Schritt der Systemanlaufphase ist. Bei dem Prüfschritt S1 wird das Urladerprogramm 31 als zu prüfendes Programm dem Sicherheitsbaustein 35 zugeführt und in diesem unter Anwendung des in ihm gespeicherten geheimen Schlüssels eine Verschlüsselung zur Berechnung einer Prüfziffer durchgeführt, die dann mit der in ihm gespeicherten Prüfziffer für das Urladerprogramm 31 verglichen wird. Bei Übereinstimmung beider Prüfziffern ergibt sich eine Ja-Aussage, mit der das Urladerprogramm 31 für den Prüfschritt S2 angesteuert wird, so daß es für diesen Prüfschritt zur aktiven Komponente wird, mit der das residente Betriebssystem 32 geprüft wird. Eine vom Sicherheitsbaustein 35 abgegebene Nein-Aussage wird einem Steuerprogramm 36 zugeführt, das den weiteren Systemanlauf in hier nicht dargestellter Weise unterbrechen kann.

Das residente Betriebssystem 32 wird als passive Komponente mit seinen einzelnen Programmteilen durch das Urladerprogramm 31 an den für diesen Prüfschritt S2 nicht gezeigten Sicherheitsbaustein übergeben, so daß es dort einer Verschlüsselung unterzogen werden kann, durch die sich eine Prüfziffer ergibt. Diese Prüfziffer wird mit einer Prüfziffer 34 verglichen, die gleichzeitig dem Urladerprogramm 31 bzw. dem damit irn Verbindung stehenden Sicherheitsbaustein zugeführt wird. Bei Gleichheit beider Prüfziffern ergibt sich eine Ja-Aussage, die das residente Betriebssystem 32 ansteuert und dieses zur aktiven Komponente macht, die dann die Prüfung von Programmteilen aus der Ladebibliothek 33 veranlaßt. Dieser Prüfschritt S3 wird wie der Prüfschritt S2 durchgeführt, so daß sich bei Übereinstimmung der in ihm errechneten Prüfziffer mit der dem jeweils zu prüfenden Programm zugehörigen Prüfziffer 34 eine Ja-Aussage ergibt, die an das Steuerprogramm 36 weitergegeben wird, welches dann den Betrieb der Anwendungsphase durch ein Signal AW starten kann.

Innerhalb der Anwendungsphase können selbstverständlich weitere Prüfschritte der hier beschriebenen Art durchgeführt werden, sofern die einzelnen Anwendungsprogramme im Verwaltungsrechner mit einer Prüfziffer versehen wurden, die in einem Prüfziffernspeicher oder auch in der Ladebibliothek gespeichert sein kann.

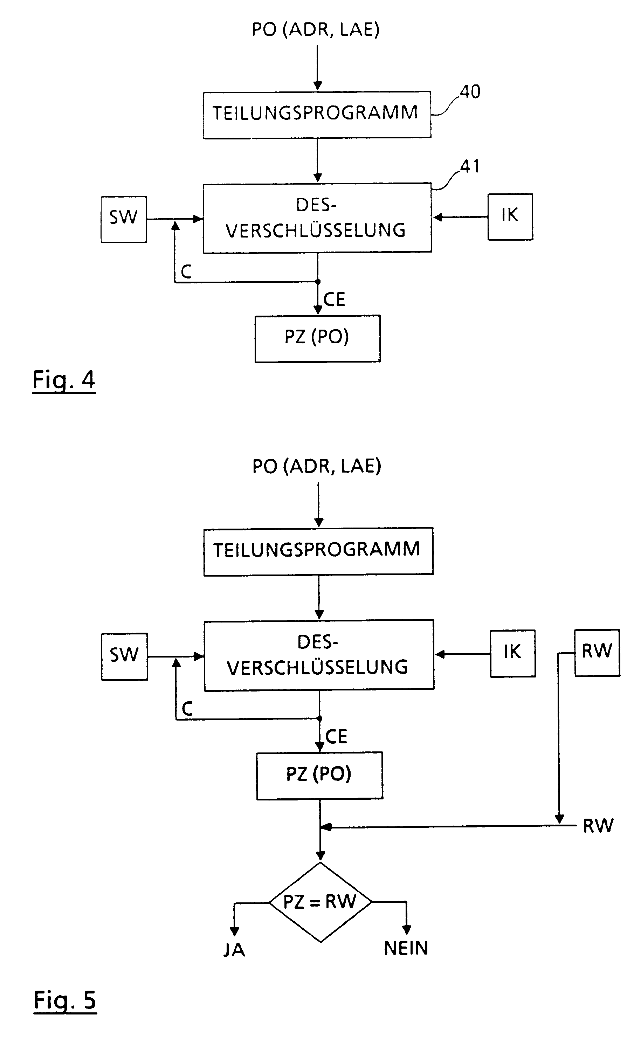

In Fig. 4 ist in Blockdarstellung die Erzeugung einer Prüfziffer mit einem Verschlüsselungsbaustein im Verwaltungsrechner dargestellt. Ein zu prüfendes Programm oder Prüfobjekt P0, für das eine Prüfziffer PZ(P0) zu berechnen ist, wird unter Angabe einer Adresse ADR und einer Länge LAE einem Teilungsprogramm zugeführt, um das Prüfobjekt in einzelne Blöcke B aufzuteilen. Diese Blöcke B haben untereinander gleiche Länge und werden jeweils mindestens einmal einem DES-Verschlüsselungsschritt mit geheimem Startwert SW und Schlüssel IK unterzogen. Dazu dient ein Verschlüsselungsprogramm 41. Das bei der Verschlüsselung eines jeweiligen Blocks B eintretende Ergebnis C wird dem Verschlüsselungsprogramm 41 als Startwert für den nächsten zu verschlüsselnden Block zugeführt. Das Verschlüsselungsergebnis des letzten Blocks B ist mit CE bezeichnet und stellt die erzeugte Prüfziffer PZ(P0) dar, die dann einem Programm zugeordnet oder aber in einem Sicherheitsbaustein als Prüfziffer für ein Urladerprogramm gespeichert werden kann.

Es ist darauf hinzuweisen, daß dieses Erzeugen einer Prüfziffer mit Firmware oder mit Software ausgeführt werden kann.

Fig. 5 zeigt die Durchführung einer Prüfziffernkontrolle im Zielrechner mit einem Sicherheitsbaustein. Die Prüfziffernkontrolle unterscheidet sich von der an Hand der Fig. 4 beschriebenen Erzeugung lediglich durch die Ein-/Ausgabeparameter und durch einen Vergleichsvorgang. Zusätzlicher Eingabeparameter ist ein Referenzwert RW, der nach der Berechnung der Prüfziffer PZ(P0) als Vergleichswert dient. Das Vergleichsergebnis steuert als Ja-Nein-Aussage in bereits beschriebener Weise weitere Prüfschritte oder ein Steuerprogramm an.

Das Verfahren der Prüfziffernkontrolle erfordert für die in Fig. 4 gezeigte Verschlüsselung und die in Fig. 5 gezeigte Prüfziffernkontrolle übereinstimmende Verschlüsselungsverfahren, Startwerte und Schlüssel.

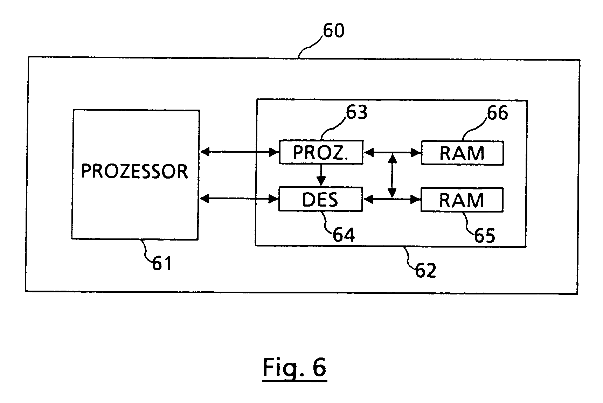

Fig. 6 zeigt den prinzipiellen Aufbau eines Sicherheitsbausteins 60 als Ausführungsbeispiel. Es kann sich dabei um einen Hardwaremodul handeln, der über eine Steckverbindung mit dem Zielrechner verbunden sein kann. Über diese Verbindung werden Befehle und Daten zwischen Zielrechner und Sicherheitsbaustein ausgetauscht. Wesentliche Bestandteile des Sicherheitsbausteins sind ein Prozessor 61 und ein Sicherheits-Hybridmodul 62. Der Prozessor 61 dient der Steuerung der einzelnen Funktionen des Sicherheitsbausteins 60, beispielsweise zur Befehlsdecodierung, zum Durchschalten von Datenleitungen und zur Auftragsvergabe an den Sicherheits-Hybridmodul 62. Dieser ist ein Baustein nach Art eines integrierten Schaltkreises, dessen modulare Bestandteile aber diskret aufgebracht sind und insgesamt mit einer Keramikabdeckung versehen sein können. Der Hybridmodul enthält einen Prozessor 63, einen DES-Baustein 64 sowie zwei Schlüsselspeicher 65 und 66 mit wahlfreiem Zugriff. Der Prozessor 63 dient der Steuerung und Ausführung von Befehlen und Daten zwischen dem DES-Baustein 64 und den lesegeschützten Schlüsselspeichern 65 und 66. Ferner steuert er den externen Datenfluß zum Prozessor 61. Der DES-Baustein 64 steuert die Ausführung des beschriebenen Verschlüsselungsverfahrens. Der Schlüsselspeicher 65 dient zur Aufnahme von Schlüsseln mit einer Länge von z.B. 64 Bit, die der Anwendung zur DES-Verschlüsselung zur Verfügung stehen; der Schlüsselspeicher 66 enthält Schlüssel, die nur vom Prozessor 63 für interne Funktionen benützt werden können, nicht aber durch externe Anwendungsprogramme. Ein Zugriff auf eine Datenleitung innerhalb des Sicherheits-Hybridmoduls wird durch die genannte keramische Abdeckung verhindert. Sollte die Verbindung des Sicherheitsbausteins 60 zum Zielrechner unterbrochen werden, so wird dadurch der Schlüsselspeicher 65 gelöscht. Der Inhalt des Schlüsselspeichers 66 kann durch eine Batterie gehalten werden. Sollte der Hybridmodul 62 aus dem Sicherheitsbaustein 60 entfernt werden, so bedeutet dies den Verlust aller gespeicherten Werte. Damit ist gewährleistet, daß eine Nutzung des Sicherheitsbausteins 60 außerhalb des Rechnerbereichs nicht möglich ist.

## Patentansprüche

1. Verfahren zum Sichern der in dem Systemspeicher einer Datenverarbeitungsanlage enthaltenen Programme gegen Änderung und zur Integritätskontrolle gesicherter Programme, dadurch **gekennzeichnet**, daß mindestens die den Systemanlauf bewirkenden Programme jeweils nach einem symmetrischen kryptographischen Algorithmus unter Verwendung eines lesegeschützt gespeicherten geheimen Schlüssels zur Bildung einer Prüfziffer verschlüsselt werden, die in dem Systemspeicher gespeichert wird, und daß zur Integritätskontrolle mit dem Systemanlauf der Datenverarbeitungsanlage ein sukzessives nochmaliges derartiges Verschlüsseln der Programme und jeweils ein Vergleich der so erhaltenen Prüfziffer mit der zugehörigen gespeicherten Prüfziffer veranlaßt wird, so daß bei negativem Vergleichsergebnis das Aktivieren jeweils nachfolgender Systemanlaufschritte bzw. Programme sperrbar ist.

2. Verfahren nach Anspruch 1, dadurch **gekennzeichnet,** daß die Prüfziffer des ersten, den Start des Systemanlaufs bewirkenden Programms (Urladerprogramm) lesegeschützt gespeichert wird.

3. Verfahren nach Anspruch 1 oder 2, dadurch **gekennzeichnet,** daß als Algorithmus der DES-Algorithmus verwendet wird.

4. Verfahren nach einem der Ansprüche 1 bis 3, dadurch **gekennzeichnet,** daß zur Sicherung der Programme in einem aus Verwaltungsrechner und Zielrechnern bestehenden Rechnernetz das erstgenannte Verschlüsseln für die Systemträger der Zielrechner im Verwaltungsrechner durchgeführt wird und daß das nochmalige Verschlüsseln zur Integritätskontrolle in jedem Zielrechner unter Verwendung desselben lesegeschützt gespeicherten geheimen Schlüssels automatisch mit der Systemanlaufprozedur durchgeführt wird.

## Claims

1. Process for securing the programs contained in the system memory of a data processing system against alteration and for verifying the integrity of secured programs, characterized in that at least the programs effecting the system start-up are encrypted in each case according to a symmetrical cryptographic algorithm using a secret key stored in read-protected form to form a check digit which is stored in the system memory, and in that for verifying the integrity, when the data processing system is started up, a successive, repeated such encryption of the programs and in each case a comparison of the check digit thus obtained with the associated stored check digit is initiated, so that when the result of the comparison is negative, the activation of respective subsequent system start-up steps or programs can be blocked.

2. Process according to Claim 1, characterized in that the check digit of the first program (initial program loader) effecting the commencement of the system start-up is stored in read-protected form.

3. Process according to Claim 1 or 2, characterized in that the DES algorithm is used as the algorithm.

4. Process according to one of Claims 1 to 3, characterized in that for securing the programs in a computer network comprising administration computer and target computers, the first encryption mentioned is carried out for the system carriers of the target computers in the administration computer, and in that the repeated encryption for verifying integrity is carried out automatically with the system start-up procedure in each target computer using the same secret key stored in read-protected form.

## Revendications

1. Procédé pour protéger des programmes contenus dans la mémoire du système d'une installation de traitement de données, vis-à-vis d'une modification et pour contrôler l'intégrité de programmes protégés, caractérisé par le fait qu'au moins les programmes déclenchant le démarrage du système sont codés respectivement selon un algorithme cryptographique symétrique, moyennant l'utilisation d'un code secret, mémorisé d'une manière protégée contre la lecture, pour la formation d'un chiffre de contrôle, qui est mémorisé dans la mémoire du système, et que pour le contrôle de l'intégrité, lors du démarrage du système, l'installation de traitement de données est amenée à réaliser un codage répété successif des programmes et respectivement une comparaison des chiffres de contrôle ainsi obtenus aux chiffres de contrôle mémorisés associés, de sorte que l'activation de pas successifs respectifs de démarrage du système ou de programmes respectifs successifs peut être bloquée, dans le cas d'un résultat négatif de la comparaison.

2. Procédé suivant la revendication 1, caractérisé par le fait que le chiffre de contrôle du premier programme (programme de chargement initial), qui déclenche le démarrage du système, est mémorisé d'une manière protégée vis-à-vis d'une lecture.

3. Procédé suivant la revendication 1 ou 2, caractérisé par le fait qu'on utilise comme algorithme l'algorithme DES.

4. Procédé suivant l'une des revendications 1 à 3, caractérisé par le fait que pour la protection des programmes, dans un réseau de calculateurs constitué par un calculateur de gestion et des calculateurs de destination, le codage indiqué en premier lieu pour le support du système des calculateurs de destination est réalisé dans le calculateur de gestion et que le codage réitéré pour le contrôle d'intégrité est exécuté automatiquement dans chaque calculateur de destination, au moyen de la procédure de démarrage du système, moyennant l'utilisation du même code secret, qui est mémorisé d'une manière protégée vis-à-vis de la lecture.
